# EUROPÄISCHE PATENTSCHRIFT

(11) **EP 2 881 289 B1**
(45) Veröffentlichungstag und Bekanntmachung des Hinweises auf die Patenterteilung: **10.05.2017**
(21) Anmeldenummer: 14195885.0
(22) Anmeldetag: 02.12.2014
(51) Int. Cl.: B60R 25/20, B60R 25/24

(54) **Verfahren zum Entriegeln einer Fahrzeugverriegelungsanlage**
Method for unlocking a vehicle locking assembly
Procédé de déverrouillage d'une installation de verrouillage de véhicule

(30) Priorität: 06.12.2013 DE 102013113667
(43) Veröffentlichungstag der Anmeldung: 10.06.2015
(73) Patentinhaber: Bundesdruckerei GmbH, 10958 Berlin (DE)
(72) Erfinder: Schröder, Martin, 12437 Berlin (DE); Morgner, Frank, 15537 Grünheide (DE); Dietrich, Frank, 12437 Berlin (DE)
(74) Vertreter: Patentship Patentanwaltsgesellschaft mbH

(56) Entgegenhaltungen:
- WO-A1-2010/031625
- DE-A1-102012 009 019
- DE-A1-102012 201 016
- DE-C1- 19 917 885
- US-A1- 2011 153 121

## Beschreibung

Die Erfindung betrifft das Gebiet des Entriegelns von Fahrzeugverriegelungsanlagen.

Die Offenlegungsschrift DE 10 2012 009 019 A1 zeigt ein Verfahren zum Betrieb eines Fahrzeugs sowie eine entsprechende Betriebseinrichtung und ein Fahrzeug.

Fahrzeugverriegelungsanlagen werden eingesetzt, um einem eingeschränkten und vordefinierten Personenkreis einen Zugang zu einem Fahrzeug zu ermöglichen.

Fahrzeugverriegelungsanlagen werden zumeist mittels eines Fahrzeugschlüssels entriegelt, welcher in ein Fahrzeugschloss eingeführt wird. Aufgrund ihrer geometrischen Abmessungen, werden Fahrzeugschlüssel häufig als unkomfortabel und unhandlich empfunden.

Zur Entriegelung von Fahrzeugverrieglungsanlagen können darüber hinaus Smartcards oder Near-Field-Communication (NFC) Sticker eingesetzt werden. Diese sind dabei auf spezielle Fahrzeugverriegelungsanlagen ausgelegt und werden hierfür gesondert produziert und eingerichtet.

Es ist daher die Aufgabe der vorliegenden Erfindung, ein komfortables und flexibles Konzept zum Entriegeln einer Fahrzeugverriegelungsanlage zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch eine Verwendung eines elektronisch auslesbaren Identifikationsdokumentes gelöst werden kann.

Gemäß einem ersten Aspekt betrifft die Erfindung ein Verfahren zum Entriegeln einer Fahrzeugverriegelungsanlage eines Fahrzeugs unter Verwendung eines elektronisch auslesbaren Identifikationsdokumentes, wobei das elektronisch auslesbare Identifikationsdokument eine optisch erfassbare Identifikationskennung aufweist, mit optischem Erfassen der optisch erfassbaren Identifikationskennung des elektronisch auslesbaren Identifikationsdokumentes, Aufbauen einer ersten Kommunikationsverbindung zwischen dem elektronisch auslesbaren Identifikationsdokument und der Fahrzeugverriegelungsanlage auf der Basis der optisch erfassten Identifikationskennung, Aufbauen einer zweiten Kommunikationsverbindung zwischen der Fahrzeugverriegelungsanlage und einem Identifizierungsserver, Auslesen
einer elektronischen Identifikation aus dem Identifikationsdokument durch den Identifizierungsserver über die erste Kommunikationsverbindung und die zweite Kommunikationsverbindung, und Entriegeln der Fahrzeugverriegelungsanlage bei Übereinstimmung zwischen der ausgelesenen elektronischen Identifikation und einer vorgespeicherten elektronischen Identifikation. Dadurch wird der Vorteil erreicht, dass ein komfortables und flexibles Konzept zum Entriegeln einer Fahrzeugverriegelungsanlage realisiert werden kann.

Die Fahrzeugverriegelungsanlage kann einen Zugang zu dem Fahrzeug ermöglichen oder verwehren. Die Fahrzeugverriegelungsanlage kann beispielsweise eine Sperranlage für eine Fahrzeugtür sein. Das Fahrzeug kann beispielsweise ein Personenkraftwagen oder ein Lastkraftwagen sein.

Das elektronisch auslesbare Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die optisch erfassbare Identifikationskennung kann durch eine Folge von Buchstaben, Ziffern, und/oder Symbolen gebildet sein. Die optisch erfassbare Identifikationskennung kann ferner in Form eines Strichcodes, eines zweidimensionalen Codes, beispielsweise eines Quick-Response (QR) Codes, oder eines Hologramms repräsentiert sein.

Die elektronische Identifikation kann durch eine Folge von Buchstaben, Ziffern, Bytes und/oder Symbolen gebildet sein. Die elektronische Identifikation kann eine persönliche Angabe über eine Person, beispielsweise einen Namen, und/oder eine elektronische Kennung des Identifikationsdokumentes, beispielsweise eine Seriennummer, umfassen. Die elektronische Identifikation kann ferner durch das Identifikationsdokument erzeugt und/oder gespeichert werden.

Die vorgespeicherte elektronische Identifikation kann beispielsweise in einem Speicher oder einer Datenbank abgelegt sein.

Der Identifizierungsserver kann ausgebildet sein, die elektronische Identifikation aus dem Identifikationsdokument auszulesen. Der Identifizierungsserver kann ferner ausgebildet sein, die Authentizität bzw. Echtheit des Identifikationsdokumentes zu verifizieren.

Die erste Kommunikationsverbindung kann drahtgebunden oder drahtlos sein. Die erste Kommunikationsverbindung kann authentifiziert und/oder verschlüsselt aufgebaut werden.

Die zweite Kommunikationsverbindung kann drahtgebunden oder drahtlos sein. Die zweite Kommunikationsverbindung kann authentifiziert und/oder verschlüsselt aufgebaut werden. Die zweite Kommunikationsverbindung kann ferner über ein Kommunikationsnetzwerk, beispielsweise Internet, aufgebaut werden.

Das optische Erfassen der optisch erfassbaren Identifikationskennung kann auf Grundlage einer Mustererkennung durchgeführt werden.

Das Aufbauen der ersten Kommunikationsverbindung zwischen dem elektronisch auslesbaren Identifikationsdokument und der Fahrzeugverriegelungsanlage kann eine Übertragung kryptographischer Schlüssel und/oder kryptographischer Zertifikate umfassen. Die kryptographischen Schlüssel und/oder kryptographischen Zertifikate können auf der Basis der optisch erfassten Identifikationskennung erzeugt werden.

Das Aufbauen der zweiten Kommunikationsverbindung zwischen der Fahrzeugverriegelungsanlage und dem Identifizierungsserver kann eine Übertragung kryptographischer Schlüssel und/oder kryptographischer Zertifikate umfassen.

Das Auslesen der elektronischen Identifikation aus dem Identifikationsdokument durch den Identifizierungsserver über die erste Kommunikationsverbindung und die zweite Kommunikationsverbindung kann eine Übertragung kryptographischer Schlüssel und/oder kryptographischer Zertifikate zwischen dem Identifikationsdokument und dem Identifizierungsserver umfassen. Ferner kann das Auslesen der elektronischen Identifikation eine Verifikation der Authentizität bzw. Echtheit des Identifikationsdokumentes und/oder der elektronischen Identifikation umfassen.

Das Entriegeln der Fahrzeugverriegelungsanlage kann bei Übereinstimmung zwischen der ausgelesenen elektronischen Identifikation und der vorgespeicherten elektronischen Identifikation durchgeführt werden. Eine Übereinstimmung zwischen der ausgelesenen elektronischen Identifikation und der vorgespeicherten elektronischen Identifikation kann vorliegen, wenn die ausgelesene elektronische Identifikation und die vorgespeicherte elektronische Identifikation identisch sind. Das Entriegeln der Fahrzeugverriegelungsanlage kann ferner ansprechend auf einen Empfang eines Authentifizierungssignals durch die Fahrzeugverriegelungsanlage durchgeführt werden.

Gemäß einer Ausführungsform wird die Fahrzeugverriegelungsanlage bei mangelnder Übereinstimmung zwischen der ausgelesenen elektronischen Identifikation und der vorgespeicherten elektronischen Identifikation nicht entriegelt. Dadurch wird der Vorteil erreicht, dass die Fahrzeugverriegelungsanlage bei mangelnder Übereinstimmung zwischen der ausgelesenen elektronischen Identifikation und der vorgespeicherten elektronischen Identifikation versperrt bleibt.

Gemäß einer Ausführungsform wird zur optischen Erfassung der optisch erfassbaren Identifikationskennung ein optisches Bild der optisch erfassbaren Identifikationskennung mittels einer Bildkamera aufgenommen. Dadurch wird der Vorteil erreicht, dass die optischen Eigenschaften der optisch erfassbaren Identifikationskennung effizient erfasst und verarbeitet werden können.

Das optische Bild kann im sichtbaren Wellenlängenbereich aufgenommen werden. Das optische Bild kann ein Schwarzweißbild, ein Graustufenbild oder ein Farbbild sein.

Die Bildkamera kann ausgebildet sein, das optische Bild im sichtbaren Wellenlängenbereich aufzunehmen. Die Bildkamera kann einen Bildsensor und/oder ein Kameraobjektiv umfassen.

Gemäß einer Ausführungsform umfasst das Erfassen der optisch erfassbaren Identifikationskennung ein Extrahieren der Identifikationskennung aus einem optischen Bild des Identifikationsdokumentes. Dadurch wird der Vorteil erreicht, dass die optisch erfassbare Identifikationskennung in unterschiedlichen Bereichen des optischen Bildes angeordnet sein kann.

Das Extrahieren der Identifikationskennung kann ein Freistellen, Entzerren, Drehen und/oder Skalieren der Identifikationskennung umfassen. Das Extrahieren der Identifikationskennung kann eine Texterkennung bzw. eine Optical Character Recognition (OCR) umfassen. Das Extrahieren der Identifikationskennung kann ferner ein Dekodieren eines Strichcodes, eines zweidimensionalen Codes, beispielsweise eines Quick-Response (QR) Codes, oder eines Hologramms umfassen.

Gemäß einer Ausführungsform wird das Aufbauen der ersten Kommunikationsverbindung zwischen dem elektronisch auslesbaren Identifikationsdokument und der Fahrzeugverriegelungsanlage mittels eines passwortauthentifizierten Verbindungsaufbauprotokolls durchgeführt. Dadurch wird der Vorteil erreicht, dass eine authentifizierte und/oder verschlüsselte Kommunikationsverbindung aufgebaut werden kann.

Das passwortauthentifizierte Verbindungsaufbauprotokoll kann eine Übertragung kryptographischer Schlüssel und/oder kryptographischer Zertifikate umfassen. Die kryptographischen Schlüssel und/oder kryptographischen Zertifikate können auf der Basis der optisch erfassten Identifikationskennung erzeugt werden. Das passwortauthentifizierte Verbindungsaufbauprotokoll kann ferner auf einem Diffie-Hellman-Schlüsselaustausch basieren. Die optisch erfasste Identifikationskennung kann als Passwort für das passwortauthentifizierte Verbindungsaufbauprotokoll eingesetzt werden.

Gemäß einer Ausführungsform ist das passwortauthentifizierte Verbindungsaufbauprotokoll ein Password Authenticated Connection Establishment Protokoll. Dadurch wird der Vorteil erreicht, dass ein standardisiertes passwortauthentifiziertes Verbindungsaufbauprotokoll eingesetzt werden kann.

Das Password Authenticated Connection Establishment (PACE) Protokoll kann beispielsweise gemäß der technischen Richtlinie BSI TR-03110 realisiert werden.

Gemäß einer Ausführungsform wird das Aufbauen der zweiten Kommunikationsverbindung zwischen der Fahrzeugverriegelungsanlage und dem Identifizierungsserver mittels eines Transportschichtsicherheitsprotokolls durchgeführt. Dadurch wird der Vorteil erreicht, dass eine authentifizierte und/oder verschlüsselte Kommunikationsverbindung aufgebaut werden kann.

Das Transportschichtsicherheitsprotokoll kann eine Übertragung kryptographischer Schlüssel und/oder kryptographischer Zertifikate umfassen. Das Transportschichtsicherheitsprotokoll kann ferner auf einem Diffie-Hellman-Schlüsselaustausch basieren. Das Transportschichtsicherheitsprotokoll kann beispielsweise ein Transport Layer Security (TLS) Protokoll sein.

Gemäß einer Ausführungsform umfasst das elektronisch auslesbare Identifikationsdokument einen integrierten Schaltkreis, und umfasst das Auslesen der elektronischen Identifikation aus dem Identifikationsdokument ein Durchführen eines Chipauthentifizierungsverfahrens zur Authentifizierung des integrierten Schaltkreises des Identifikationsdokumentes. Dadurch wird der Vorteil erreicht, dass die Authentizität bzw. Echtheit des integrierten Schaltkreises des Identifikationsdokumentes verifiziert werden kann.

Der integrierte Schaltkreis kann elektronisch auslesbar sein. Der integrierte Schaltkreis kann beispielsweise ein Radio Frequency Identification (RFID) Chip sein.

Das Chipauthentifizierungsverfahren kann eine Übertragung kryptographischer Schlüssel und/oder kryptographischer Zertifikate umfassen. Das Chipauthentifizierungsverfahren kann ausgebildet sein, die Authentizität bzw. Echtheit des integrierten Schaltkreises zu verifizieren. Das Chipauthentifizierungsverfahren kann beispielsweise ein Chip Authentication (CA) Verfahren sein und gemäß der technischen Richtlinie BSI TR-03110 realisiert werden.

Gemäß einer Ausführungsform wird die erste Kommunikationsverbindung zu dem elektronisch auslesbaren Identifikationsdokument über ein Terminal für eine Kommunikation mit dem elektronisch auslesbaren Identifikationsdokument aufgebaut, und umfasst das Auslesen der elektronischen Identifikation aus dem Identifikationsdokument ein Durchführen eines Terminalauthentifizierungsverfahrens zur Authentifizierung des Terminals oder des Identifizierungsservers. Dadurch wird der Vorteil erreicht, dass die Authentizität bzw. Echtheit des Terminals oder des Identifizierungsservers verifiziert werden kann.

Das Terminal kann ein Lesegerät für eine Kommunikation mit dem elektronisch auslesbaren Identifikationsdokument sein.

Das Terminalauthentifizierungsverfahren kann eine Übertragung kryptographischer Schlüssel und/oder kryptographischer Zertifikate umfassen. Das Terminalauthentifizierungsverfahren kann ausgebildet sein, die Authentizität bzw. Echtheit des Terminals oder des Identifizierungsservers zu verifizieren. Das Terminalauthentifizierungsverfahren kann beispielsweise ein Terminal Authentication (TA) Verfahren sein und gemäß der technischen Richtlinie BSI TR-03110 realisiert werden.

Gemäß einer Ausführungsform umfasst das Entriegeln der Fahrzeugverriegelungsanlage ein Aussenden eines Authentifizierungssignals an die Fahrzeugverriegelungsanlage. Dadurch wird der Vorteil erreicht, dass das Entriegeln der Fahrzeugverriegelungsanlage durch ein externes Signal eingeleitet werden kann.

Das Authentifizierungssignal kann durch eine elektronische Nachricht, einen Befehl, ein Kommando und/oder einen Prozess gebildet sein. Das Authentifizierungssignal kann von dem Identifizierungsserver erzeugt und ausgesendet werden.

Gemäß einer Ausführungsform umfasst das Verfahren ferner ein Übertragen eines öffentlichen kryptographischen Schlüssels durch den Identifizierungsserver zu dem Identifikationsdokument, ein Erzeugen einer elektronischen Identifikation durch eine Verknüpfung eines privaten kryptographischen Schlüssels des Identifikationsdokumentes und des übertragenen öffentlichen kryptographischen Schlüssels durch das Identifikationsdokument, und ein Speichern der erzeugten elektronischen Identifikation, um die vorgespeicherte elektronische Identifikation zu erhalten. Dadurch wird der Vorteil erreicht, dass eine vorgespeicherte elektronische Identifikation bereitgestellt werden kann, welche dem Identifikationsdokument zugeordnet ist.

Der öffentliche kryptographische Schlüssel kann Teil eines kryptographischen Schlüsselpaares sein und gemäß einer Public-Key-Infrastruktur erzeugt worden sein.

Der private kryptographische Schlüssel des Identifikationsdokumentes kann Teil eines kryptographischen Schlüsselpaares sein und gemäß einer Public-Key-Infrastruktur erzeugt worden sein.

Die Verknüpfung des privaten kryptographischen Schlüssels des Identifikationsdokumentes und des übertragenen öffentlichen kryptographischen Schlüssels kann durch binäre Verknüpfungen, wie beispielsweise Exklusiv-Oder, durch kryptographische Algorithmen, wie beispielsweise Advanced Encryption Standard (AES), und/oder durch Algorithmen zur Hashwertbildung, wie beispielsweise Secure Hash Algorithm (SHA), realisiert werden. Die Verknüpfung kann ferner eine Berechnung von Prüfsummen des privaten kryptographischen Schlüssels des Identifikationsdokumentes und/oder des übertragenen öffentlichen kryptographischen Schlüssels umfassen.

Das Übertragen des öffentlichen kryptographischen Schlüssels kann beispielsweise über die erste Kommunikationsverbindung und die zweite Kommunikationsverbindung durchgeführt werden.

Das Erzeugen der elektronischen Identifikation kann ein Generieren oder ein Bereitstellen der elektronischen Identifikation umfassen.

Das Speichern der erzeugten elektronischen Identifikation kann ein Übertragen der erzeugten elektronischen Identifikation von dem Identifikationsdokument zu dem Identifizierungsserver umfassen. Das Speichern der erzeugten elektronischen Identifikation kann ferner ein Ablegen der erzeugten übertragenen elektronischen Identifikation in einen Speicher oder eine Datenbank des Identifizierungsservers umfassen.

Gemäß einer Ausführungsform ist die elektronische Identifikation des Identifikationsdokumentes eine Restricted Identification des Identifikationsdokumentes. Dadurch wird der Vorteil erreicht, dass eine pseudonyme elektronische Identifikation des Identifikationsdokumentes eingesetzt werden kann.

Die Restricted Identification des Identifikationsdokumentes kann auf Grundlage eines Diffie-Hellman-Schlüsselaustausches durch das Identifikationsdokument erzeugt werden. Die Restricted Identification des Identifikationsdokumentes kann beispielsweise gemäß der technischen Richtlinie BSI TR-03110 realisiert werden.

Gemäß einer Ausführungsform ist die optisch erfassbare Identifikationskennung des Identifikationsdokumentes eine Card Access Number des Identifikationsdokumentes. Dadurch wird der Vorteil erreicht, dass eine nummerische Identifikationskennung des Identifikationsdokumentes eingesetzt werden kann.

Die Card Access Number (CAN) des Identifikationsdokumentes kann eine sechsstellige dezimale Nummer sein. Die Card Access Number kann auf das elektronisch auslesbare Identifikationsdokument aufgedruckt und optisch erfassbar sein. Die Card Access Number kann ferner als Passwort für ein Password Authenticated Connection Establishment (PACE) Protokoll eingesetzt werden und beispielsweise Eigenschaften gemäß der technischen Richtlinie BSI TR-03127 aufweisen.

Gemäß einer Ausführungsform ist der Identifizierungsserver ein elD-Server. Dadurch wird der Vorteil erreicht, dass ein standardisierter Identifizierungsserver eingesetzt werden kann.

Der elD-Server kann beispielsweise gemäß der technischen Richtlinie BSI TR-03130 realisiert sein und mit dem Identifikationsdokument wechselwirken.

Gemäß einem zweiten Aspekt betrifft die Erfindung eine Fahrzeugverriegelungsanlage, welche unter Verwendung eines elektronisch auslesbaren Identifikationsdokumentes entriegelbar ist, mit einem Terminal, welches ausgebildet ist, eine elektronische Identifikation aus dem elektronisch auslesbaren Identifikationsdokument auszulesen, einer Bildkamera, welche ausgebildet ist, eine optisch erfassbare Identifikationskennung des elektronisch auslesbaren Identifikationsdokumentes optisch zu erfassen, und einer Kommunikationsschnittstelle, welche ausgebildet ist, die ausgelesene elektronische Identifikation über eine Kommunikationsverbindung auszusenden, und ein Authentifizierungssignal zum Entriegeln der Fahrzeugverriegelungsanlage zu empfangen. Dadurch wird der Vorteil erreicht, dass ein komfortables und flexibles Konzept zum Entriegeln einer Fahrzeugverriegelungsanlage realisiert werden kann.

Die Fahrzeugverriegelungsanlage kann einen Zugang zu dem Fahrzeug ermöglichen oder verwehren. Die Fahrzeugverriegelungsanlage kann beispielsweise eine Sperranlage für eine Fahrzeugtür sein. Das Fahrzeug kann beispielsweise ein Personenkraftwagen oder ein Lastkraftwagen sein.

Das elektronisch auslesbare Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das Terminal kann ein Lesegerät für eine Kommunikation mit dem elektronisch auslesbaren Identifikationsdokument sein. Das Terminal kann beispielsweise an oder hinter einer Scheibe des Fahrzeugs, beispielsweise zwischen einer B-Säule und einer C-Säule des Fahrzeugs, angeordnet sein. Das Terminal kann ferner beispielsweise in einer Säule des Fahrzeugs angeordnet sein.

Die elektronische Identifikation kann durch eine Folge von Buchstaben, Ziffern, Bytes und/oder Symbolen gebildet sein. Die elektronische Identifikation kann eine persönliche Angabe über eine Person, beispielsweise einen Namen, und/oder eine elektronische Kennung des Identifikationsdokumentes, beispielsweise eine Seriennummer, umfassen. Die elektronische Identifikation kann ferner durch das Identifikationsdokument erzeugt und/oder gespeichert werden.

Die Bildkamera kann ausgebildet sein, ein optisches Bild im sichtbaren Wellenlängenbereich aufzunehmen. Die Bildkamera kann einen Bildsensor und/oder ein Kameraobjektiv umfassen. Die Bildkamera kann beispielsweise an oder hinter einer Scheibe des Fahrzeugs, beispielsweise zwischen einer B-Säule und einer C-Säule des Fahrzeugs, angeordnet sein. Die Bildkamera kann ferner beispielsweise in einer Säule des Fahrzeugs angeordnet sein.

Die optisch erfassbare Identifikationskennung kann durch eine Folge von Buchstaben, Ziffern, und/oder Symbolen gebildet sein. Die optisch erfassbare Identifikationskennung kann ferner in Form eines Strichcodes, eines zweidimensionalen Codes, beispielsweise eines Quick-Response (QR) Codes, oder eines Hologramms repräsentiert sein.

Die Kommunikationsschnittstelle kann ausgebildet sein, mit dem Identifizierungsserver zu kommunizieren. Die Kommunikation zwischen der Kommunikationsschnittstelle und dem Identifizierungsserver kann über ein Kommunikationsnetzwerk, beispielsweise Internet, durchgeführt werden.

Die Kommunikationsverbindung kann drahtgebunden oder drahtlos sein. Die Kommunikationsverbindung kann authentifiziert und/oder verschlüsselt aufgebaut werden.

Das Authentifizierungssignal kann durch eine elektronische Nachricht, einen Befehl, ein Kommando und/oder einen Prozess gebildet sein. Das Authentifizierungssignal kann von dem Identifizierungsserver erzeugt und ausgesendet werden.

Weitere Merkmale der Fahrzeugverrieglungsanlage ergeben sich unmittelbar aus der Funktionalität des Verfahrens zum Entriegeln einer Fahrzeugverriegelungsanlage.

Das Verfahren zum Entriegeln einer Fahrzeugverriegelungsanlage kann mittels der Fahrzeugverriegelungsanlage ausgeführt werden.

Gemäß einer Ausführungsform ist die Bildkamera eine Bildkamera eines mobilen Kommunikationsgerätes, wobei die Kommunikationsschnittstelle ferner ausgebildet ist, die optisch erfassbare Identifikationskennung von dem mobilen Kommunikationsgerät zu empfangen, und wobei das Aufbauen der ersten Kommunikationsverbindung zwischen dem elektronisch auslesbaren Identifikationsdokument und der Fahrzeugverriegelungsanlage auf der Basis der empfangenen optisch erfassten Identifikationskennung durchgeführt wird. Dadurch wird der Vorteil erreicht, dass die Bildkamera einfach bereitgestellt werden kann.

Das mobile Kommunikationsgerät kann beispielsweise ein Mobilcomputer, ein Mobiltelefon oder ein Smartphone sein.

Gemäß einem dritten Aspekt betrifft die Erfindung ein Computerprogramm mit einem Programmcode zum Ausführen des Verfahrens zum Entriegeln einer Fahrzeugverriegelungsanlage, wenn der Programmcode auf einem Computer ausgeführt wird. Dadurch wird der Vorteil erreicht, dass das Verfahren automatisiert und wiederholbar ausgeführt werden kann.

Das Computerprogramm kann eine Folge von Befehlen für einen Prozessor eines Computers umfassen. Das Computerprogramm kann in Form eines maschinen-lesbaren Programmcodes vorliegen.

Der Computer kann einen Prozessor, einen Speicher, eine Eingabeschnittstelle und/oder eine Ausgabeschnittstelle umfassen. Der Prozessor des Computers kann ausgebildet sein, das Computerprogramm auszuführen.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: ein schematisches Diagramm eines Verfahrens zum Entriegeln einer Fahrzeugverriegelungsanlage eines Fahrzeugs unter Verwendung eines elektronisch auslesbaren Identifikationsdokumentes;
- Fig. 2: ein schematisches Diagramm einer Fahrzeugverriegelungsanlage, welche unter Verwendung eines elektronisch auslesbaren Identifikationsdokumentes entriegelbar ist; und
- Fig. 3: eine schematische Anordnung zum Entriegeln einer Fahrzeugverriegelungsanlage eines Fahrzeugs unter Verwendung eines elektronisch auslesbaren Identifikationsdokumentes.

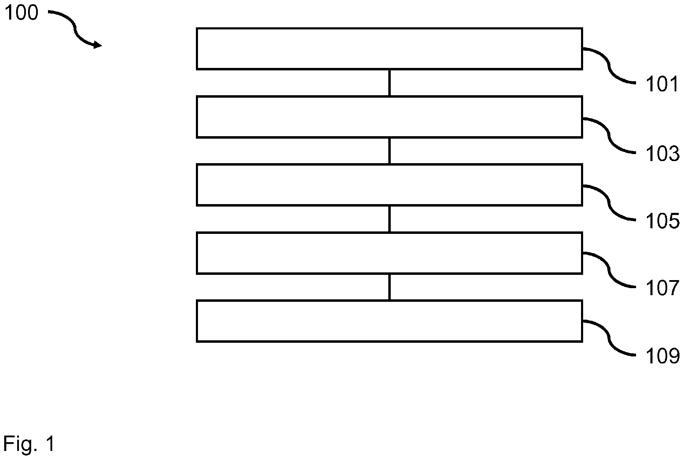

Fig. 1 zeigt ein schematisches Diagramm eines Verfahrens 100 zum Entriegeln einer Fahrzeugverriegelungsanlage eines Fahrzeugs unter Verwendung eines elektronisch auslesbaren Identifikationsdokumentes. Das elektronisch auslesbare Identifikationsdokument weist eine optisch erfassbare Identifikationskennung auf.

Das Verfahren 100 umfasst ein optisches Erfassen 101 der optisch erfassbaren Identifikationskennung des elektronisch auslesbaren Identifikationsdokumentes, ein Aufbauen 103 einer ersten Kommunikationsverbindung zwischen dem elektronisch auslesbaren Identifikationsdokument und der Fahrzeugverriegelungsanlage auf der Basis der optisch erfassten Identifikationskennung, ein Aufbauen 105 einer zweiten Kommunikationsverbindung zwischen der Fahrzeugverriegelungsanlage und einem Identifizierungsserver, ein Auslesen 107 einer elektronischen Identifikation aus dem Identifikationsdokument durch den Identifizierungsserver über die erste Kommunikationsverbindung und die zweite Kommunikationsverbindung, und ein Entriegeln 109 der Fahrzeugverriegelungsanlage bei Übereinstimmung zwischen der ausgelesenen elektronischen Identifikation und einer vorgespeicherten elektronischen Identifikation.

Das optische Erfassen 101 der optisch erfassbaren Identifikationskennung kann auf Grundlage einer Mustererkennung durchgeführt werden.

Das Aufbauen 103 der ersten Kommunikationsverbindung zwischen dem elektronisch auslesbaren Identifikationsdokument und der Fahrzeugverriegelungsanlage kann eine Übertragung kryptographischer Schlüssel und/oder kryptographischer Zertifikate umfassen. Die kryptographischen Schlüssel und/oder kryptographischen Zertifikate können auf der Basis der optisch erfassten Identifikationskennung erzeugt werden.

Das Aufbauen 105 der zweiten Kommunikationsverbindung zwischen der Fahrzeugverriegelungsanlage und dem Identifizierungsserver kann eine Übertragung kryptographischer Schlüssel und/oder kryptographischer Zertifikate umfassen.

Das Auslesen 107 der elektronischen Identifikation aus dem Identifikationsdokument durch den Identifizierungsserver über die erste Kommunikationsverbindung und die zweite Kommunikationsverbindung kann eine Übertragung kryptographischer Schlüssel und/oder kryptographischer Zertifikate zwischen dem Identifikationsdokument und dem Identifizierungsserver umfassen. Ferner kann das Auslesen 107 der elektronischen Identifikation eine Verifikation der Authentizität bzw. Echtheit des Identifikationsdokumentes und/oder der elektronischen Identifikation umfassen.

Das Entriegeln 109 der Fahrzeugverriegelungsanlage kann bei Übereinstimmung zwischen der ausgelesenen elektronischen Identifikation und der vorgespeicherten elektronischen Identifikation durchgeführt werden. Eine Übereinstimmung zwischen der ausgelesenen elektronischen Identifikation und der vorgespeicherten elektronischen Identifikation kann vorliegen, wenn die ausgelesene elektronische Identifikation und die vorgespeicherte elektronische Identifikation identisch sind. Das Entriegeln 109 der Fahrzeugverriegelungsanlage kann ferner ansprechend auf einen Empfang eines Authentifizierungssignals durch die Fahrzeugverriegelungsanlage durchgeführt werden.

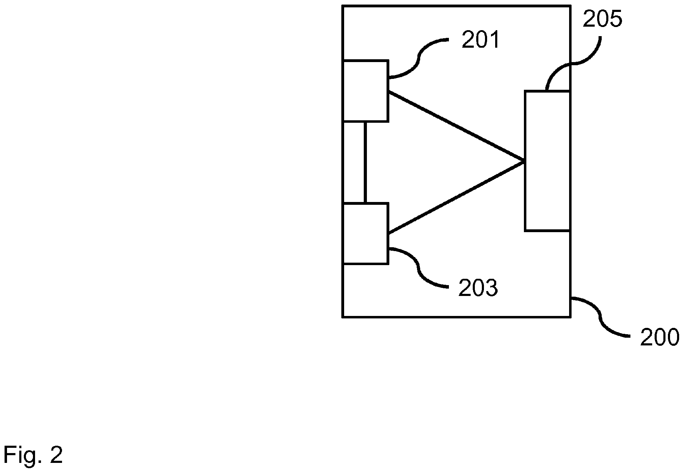

Fig. 2 zeigt ein schematisches Diagramm einer Fahrzeugverriegelungsanlage 200, welche unter Verwendung eines elektronisch auslesbaren Identifikationsdokumentes entriegelbar ist.

Die Fahrzeugverriegelungsanlage 200 umfasst ein Terminal 201, welches ausgebildet ist, eine elektronische Identifikation aus dem elektronisch auslesbaren Identifikationsdokument auszulesen, eine Bildkamera 203, welche ausgebildet ist, eine optisch erfassbare Identifikationskennung des elektronisch auslesbaren Identifikationsdokumentes optisch zu erfassen, und eine Kommunikationsschnittstelle 205, welche ausgebildet ist, die ausgelesene elektronische Identifikation über eine Kommunikationsverbindung auszusenden, und ein Authentifizierungssignal zum Entriegeln der Fahrzeugverriegelungsanlage zu empfangen.

Die Fahrzeugverriegelungsanlage 200 kann einen Zugang zu dem Fahrzeug ermöglichen oder verwehren. Die Fahrzeugverriegelungsanlage 200 kann beispielsweise eine Sperranlage für eine Fahrzeugtür sein. Das Fahrzeug kann beispielsweise ein Personenkraftwagen oder ein Lastkraftwagen sein.

Das Terminal 201 kann ein Lesegerät für eine Kommunikation mit dem elektronisch auslesbaren Identifikationsdokument sein. Das Terminal 201 kann beispielsweise an oder hinter einer Scheibe des Fahrzeugs, beispielsweise zwischen einer B-Säule und einer C-Säule des Fahrzeugs, angeordnet sein. Das Terminal 201 kann ferner beispielsweise in einer Säule des Fahrzeugs angeordnet sein.

Die Bildkamera 203 kann ausgebildet sein, ein optisches Bild im sichtbaren Wellenlängenbereich aufzunehmen. Die Bildkamera 203 kann einen Bildsensor und/oder ein Kameraobjektiv umfassen. Die Bildkamera 203 kann beispielsweise an oder hinter einer Scheibe des Fahrzeugs, beispielsweise zwischen einer B-Säule und einer C-Säule des Fahrzeugs, angeordnet sein. Die Bildkamera 203 kann ferner beispielsweise in einer Säule des Fahrzeugs angeordnet sein.

Die Kommunikationsschnittstelle 205 kann ausgebildet sein, mit dem Identifizierungsserver zu kommunizieren. Die Kommunikation zwischen der Kommunikationsschnittstelle 205 und dem Identifizierungsserver kann über ein Kommunikationsnetzwerk, beispielsweise Internet, durchgeführt werden.

Das Terminal 201, die Bildkamera 203 und die Kommunikationsschnittstelle 205 können gegenseitig miteinander verbunden sein.

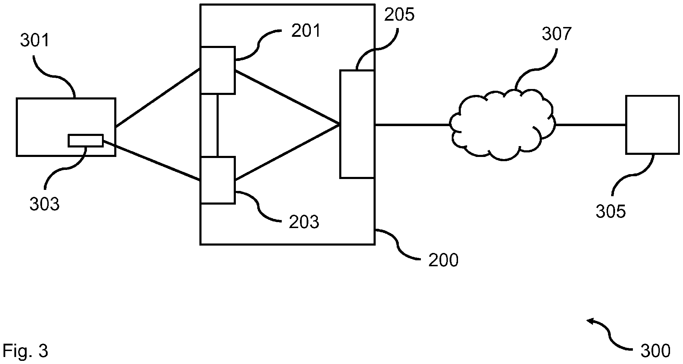

Fig. 3 zeigt eine schematische Anordnung 300 zum Entriegeln einer Fahrzeugverriegelungsanlage 200 eines Fahrzeugs unter Verwendung eines elektronisch auslesbaren Identifikationsdokumentes 301. Die Fahrzeugverriegelungsanlage 200 umfasst ein Terminal 201, eine Bildkamera 203 und eine Kommunikationsschnittstelle 205. Das elektronisch auslesbare Identifikationsdokument 301 umfasst eine optisch erfassbare Identifikationskennung 303. Die Anordnung 300 umfasst ferner einen Identifizierungsserver 305 und ein Kommunikationsnetzwerk 307.

Die Anordnung 300 kann ein Entriegeln der Fahrzeugverriegelungsanlage 200 eines Fahrzeugs unter Verwendung des elektronisch auslesbaren Identifikationsdokumentes 301 ermöglichen.

Das elektronisch auslesbare Identifikationsdokument 301 kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument 301 kann ferner einen elektronisch auslesbaren Schaltkreis, beispielsweise einen RFID-Chip umfassen. Das Identifikationsdokument 301 kann ein- oder mehrlagig bzw. papier-und/oder kunststoffbasiert sein. Das Identifikationsdokument 301 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die optisch erfassbare Identifikationskennung 303 kann durch eine Folge von Buchstaben, Ziffern, und/oder Symbolen gebildet sein. Die optisch erfassbare Identifikationskennung 303 kann ferner in Form eines Strichcodes, eines zweidimensionalen Codes, beispielsweise eines Quick-Response (QR) Codes, oder eines Hologramms repräsentiert sein.

Der Identifizierungsserver 305 kann ausgebildet sein, die elektronische Identifikation aus dem Identifikationsdokument 301 auszulesen. Der Identifizierungsserver 305 kann ferner ausgebildet sein, die Authentizität bzw. Echtheit des Identifikationsdokumentes 301 zu verifizieren.

Das Kommunikationsnetzwerk 307 kann durch eine Anordnung einer Mehrzahl von Servern, Clients und/oder Computern gebildet sein. Das Kommunikationsnetzwerk 307 kann beispielsweise das Internet sein.

Das Verfahren zum Entriegeln der Fahrzeugverriegelungsanlage 200 eines Fahrzeugs unter Verwendung des elektronisch auslesbaren Identifikationsdokumentes 301 kann beispielsweise folgendermaßen durchgeführt werden:

Die optisch erfassbare Identifikationskennung 303 des elektronisch auslesbaren Identifikationsdokumentes 301 kann mittels der Bildkamera 203 der Fahrzeugverriegelungsanlage 200 optisch erfasst werden. Daraufhin kann eine erste Kommunikationsverbindung zwischen dem elektronisch auslesbaren Identifikationsdokument 301 und dem Terminal 201 der Fahrzeugverriegelungsanlage 200 auf der Basis der optisch erfassten Identifikationskennung 303 aufgebaut werden. Daraufhin kann eine zweite Kommunikationsverbindung zwischen der Kommunikationsschnittstelle 205 der Fahrzeugverriegelungsanlage 200 und dem Identifizierungsserver 305 über das Kommunikationsnetzwerk 307 aufgebaut werden. Die elektronische Identifikation kann anschließend durch den Identifizierungsserver 305 aus dem Identifikationsdokument 301 über die erste Kommunikationsverbindung und die zweite Kommunikationsverbindung ausgelesen werden. Bei Übereinstimmung zwischen der ausgelesenen elektronischen Identifikation und einer vorgespeicherten elektronischen Identifikation kann die Fahrzeugverriegelungsanlage 200 entriegelt werden. Hierfür kann der Identifizierungsserver 305 ein Authentifizierungssignal erzeugen und an die Fahrzeugverriegelungsanlage 200 aussenden.

Gemäß einer Ausführungsform betrifft die Erfindung eine PKW-Zentralverriegelung mit einem Identifikationsdokument, beispielsweise einem neuen Personalausweis (nPA).

Gemäß einer Ausführungsform wird das Password Authenticated Connection Establishment (PACE) Protokoll mit der Card Access Number (CAN) durchgeführt.

Gemäß einer Ausführungsform werden eine elektronische Identifikation oder Daten aus dem Identifikationsdokument über einen Kanal ausgelesen, welche verwendet werden, um eine Person oder einen Benutzer zu authentifizieren.

Gemäß einer Ausführungsform kann eine eID-Funktion eines Identifikationsdokumentes, beispielsweise eines neuen Personalausweises (nPA), zum Aufschließen eines Autos verwendet werden. Dafür kann ein Password Authenticated Connection Establishment (PACE) Protokoll mit dem Identifikationsdokument, beispielsweise dem neuen Personalausweis (nPA), durchgeführt werden.

Gemäß einer Ausführungsform kann ein Password Authenticated Connection Establishment (PACE) Protokoll mit einer Card Access Number (CAN) durchgeführt werden, welche auf dem Identifikationsdokument, beispielsweise dem neuen Personalausweis (nPA), oder einem anderen Ausweis aufgedruckt ist.

Gemäß einer Ausführungsform umfasst eine Fahrzeugverriegelungsanlage bzw. Fahrzeug oder ein Automat eine Scheibe, hinter der sich eine Bildkamera bzw. Kamera sowie ein Terminal bzw. Kartenleser befinden. Des Weiteren umfasst es eine drahtlose Verbindung, beispielsweise eine zweite Kommunikationsverbindung bzw. Verbindung 1, zu einem Identifizierungsserver, beispielsweise einem eID-Server. Eine Person bzw. ein Benutzer hält ein Identifikationsdokument bzw. einen neuen Personalausweis (nPA) vor die Bildkamera bzw. Kamera der Fahrzeugverriegelungsanlage bzw. des Fahrzeugs. Diese liest die aufgedruckte CAN aus. Die Fahrzeugverriegelungsanlage bzw. das Fahrzeug benutzt die ausgelesene CAN, um über das Terminal bzw. den Kartenleser einen PACE-Kanal, beispielsweise eine erste Kommunikationsverbindung bzw. Verbindung 2, zum Identifikationsdokument bzw. neuen Personalausweis (nPA) aufzubauen. Anschließend führt der Identifizierungsserver über die erste Kommunikationsverbindung und die zweite Kommunikationsverbindung bzw. die Verbindungen 1 und 2 Authentifizierungsprotokolle (TA, CA) mit dem Identifikationsdokument, beispielsweise dem neuen Personalausweis (nPA), durch, liest die elektronische Identifikation bzw. die angeforderten Daten bzw. den Identifizierer aus dem Identifikationsdokument bzw. Ausweis aus, authentifiziert die Person bzw. den Benutzer und sendet ein Authentifizierungssignal bzw. Öffnen-Signal an die Fahrzeugverriegelungsanlage bzw. das Fahrzeug.

Gemäß einer Ausführungsform wird eine Zweifaktor-Authentisierung einer Person bzw. eines Benutzers ermöglicht.

Gemäß einer Ausführungsform kann ein verfügbares Identifikations-Token bzw. ID-Token eingesetzt werden.

### BEZUGSZEICHENLISTE

- 100: Verfahren zum Entriegeln einer Fahrzeugverriegelungsanlage
- 101: Optisches Erfassen der optisch erfassbaren Identifikationskennung
- 103: Aufbauen einer ersten Kommunikationsverbindung
- 105: Aufbauen einer zweiten Kommunikationsverbindung
- 107: Auslesen einer elektronischen Identifikation
- 109: Entriegeln der Fahrzeugverriegelungsanlage

- 200: Fahrzeugverriegelungsanlage
- 201: Terminal
- 203: Bildkamera
- 205: Kommunikationsschnittstelle

- 300: Anordnung zum Entriegeln einer Fahrzeugverriegelungsanlage
- 301: Elektronisch auslesbares Identifikationsdokument
- 303: Optisch erfassbare Identifikationskennung
- 305: Identifizierungsserver
- 307: Kommunikationsnetzwerk

## Patentansprüche

1. Verfahren (100) zum Entriegeln einer Fahrzeugverriegelungsanlage (200) eines Fahrzeugs unter Verwendung eines elektronisch auslesbaren Identifikationsdokumentes (301), wobei das elektronisch auslesbare Identifikationsdokument (301) eine optisch erfassbare Identifikationskennung (303) aufweist, mit:
optischem Erfassen (101) der optisch erfassbaren Identifikationskennung (303) des elektronisch auslesbaren Identifikationsdokumentes (301);
Aufbauen (103) einer ersten Kommunikationsverbindung zwischen dem elektronisch auslesbaren Identifikationsdokument (301) und der Fahrzeugverriegelungsanlage (200) auf der Basis der optisch erfassten Identifikationskennung (303);
Aufbauen (105) einer zweiten Kommunikationsverbindung zwischen der Fahrzeugverriegelungsanlage (200) und einem Identifizierungsserver (305);
Auslesen (107) einer elektronischen Identifikation aus dem Identifikationsdokument (301) durch den Identifizierungsserver (305) über die erste Kommunikationsverbindung und die zweite Kommunikationsverbindung; und
Entriegeln (109) der Fahrzeugverriegelungsanlage (200) bei Übereinstimmung zwischen der ausgelesenen elektronischen Identifikation und einer vorgespeicherten elektronischen Identifikation.

2. Verfahren (100) nach Anspruch 1, wobei die Fahrzeugverriegelungsanlage (200) bei mangelnder Übereinstimmung zwischen der ausgelesenen elektronischen Identifikation und der vorgespeicherten elektronischen Identifikation nicht entriegelt wird.

3. Verfahren (100) nach einem der vorstehenden Ansprüche, wobei zur optischen Erfassung (101) der optisch erfassbaren Identifikationskennung (303) ein optisches Bild der optisch erfassbaren Identifikationskennung (303) mittels einer Bildkamera (203) aufgenommen wird.

4. Verfahren (100) nach einem der vorstehenden Ansprüche, wobei das Erfassen (101) der optisch erfassbaren Identifikationskennung (303) ein Extrahieren der Identifikationskennung (303) aus einem optischen Bild des Identifikationsdokumentes (301) umfasst.

5. Verfahren (100) nach einem der vorstehenden Ansprüche, wobei das Aufbauen (103) der ersten Kommunikationsverbindung zwischen dem elektronisch auslesbaren Identifikationsdokument (301) und der Fahrzeugverriegelungsanlage (200) mittels eines passwortauthentifizierten Verbindungsaufbauprotokolls durchgeführt wird.

6. Verfahren (100) nach Anspruch 5, wobei das passwortauthentifizierte Verbindungsaufbauprotokoll ein Password Authenticated Connection Establishment Protokoll ist.

7. Verfahren (100) nach einem der vorstehenden Ansprüche, wobei das Aufbauen (105) der zweiten Kommunikationsverbindung zwischen der Fahrzeugverriegelungsanlage (200) und dem Identifizierungsserver (305) mittels eines Transportschichtsicherheitsprotokolls durchgeführt wird.

8. Verfahren (100) nach einem der vorstehenden Ansprüche, wobei das elektronisch auslesbare Identifikationsdokument (301) einen integrierten Schaltkreis umfasst, und wobei das Auslesen (107) der elektronischen Identifikation aus dem Identifikationsdokument (301) ein Durchführen eines Chipauthentifizierungsverfahrens zur Authentifizierung des integrierten Schaltkreises des Identifikationsdokumentes (301) umfasst.

9. Verfahren (100) nach einem der vorstehenden Ansprüche, wobei die erste Kommunikationsverbindung zu dem elektronisch auslesbaren Identifikationsdokument (301) über ein Terminal (201) für eine Kommunikation mit dem elektronisch auslesbaren Identifikationsdokument (301) aufgebaut wird, und wobei das Auslesen (107) der elektronischen Identifikation aus dem Identifikationsdokument (301) ein Durchführen eines Terminalauthentifizierungsverfahrens zur Authentifizierung des Terminals (201) oder des Identifizierungsservers (305) umfasst.

10. Verfahren (100) nach einem der vorstehenden Ansprüche, wobei das Entriegeln (109) der Fahrzeugverriegelungsanlage (200) ein Aussenden eines Authentifizierungssignals an die Fahrzeugverriegelungsanlage (200) umfasst.

11. Verfahren (100) nach einem der vorstehenden Ansprüche, mit:
Übertragen eines öffentlichen kryptographischen Schlüssels durch den Identifizierungsserver (305) zu dem Identifikationsdokument (301);
Erzeugen einer elektronischen Identifikation durch eine Verknüpfung eines privaten kryptographischen Schlüssels des Identifikationsdokumentes (301) und des übertragenen öffentlichen kryptographischen Schlüssels durch das Identifikationsdokument (301); und
Speichern der erzeugten elektronischen Identifikation, um die vorgespeicherte elektronische Identifikation zu erhalten.

12. Verfahren (100) nach einem der vorstehenden Ansprüche, wobei die elektronische Identifikation des Identifikationsdokumentes (301) eine Restricted Identification des Identifikationsdokumentes (301) ist.

13. Verfahren (100) nach einem der vorstehenden Ansprüche, wobei die optisch erfassbare Identifikationskennung (303) des Identifikationsdokumentes (301) eine Card Access Number des Identifikationsdokumentes (301) ist.

14. Fahrzeugverriegelungsanlage (200), welche unter Verwendung eines elektronisch auslesbaren Identifikationsdokumentes (301) entriegelbar ist, mit:
einer Bildkamera (203), welche ausgebildet ist, eine optisch erfassbare Identifikationskennung (303) des elektronisch auslesbaren Identifikationsdokumentes (301) optisch zu erfassen; und
einem Terminal (201) mit einer ersten Komunikationsschnittstelle, welches ausgebildet ist, auf der Basis der optisch erfassten Identifikationskennung (303) eine elektronische Identifikation aus dem elektronisch auslesbaren Identifikationsdokument (301) auszulesen; und
einer zweiten Kommunikationsschnittstelle (205), welche ausgebildet ist, die ausgelesene elektronische Identifikation über eine Kommunikationsverbindung an einen Identifizierungsserver (305) auszusenden, und ein Authentifizierungssignal zum Entriegeln (109) der Fahrzeugverriegelungsanlage (200) zu empfangen.

15. Computerprogramm mit einem Programmcode zum Ausführen des Verfahrens (100) nach einem der Ansprüche 1 bis 13, wenn der Programmcode auf einem Computer ausgeführt wird.

## Claims

1. Method (100) for unlocking a vehicle locking assembly (200) of a vehicle using an electronically readable identification document (301), wherein the electronically readable identification document (301) comprises an optically detectable identification code (303), comprising:
optically detecting (101) the optically detectable identification code (303) of the electronically readable identification document (301);
establishing (103) a first communication connection between the electronically readable identification document (301) and the vehicle locking assembly (200) on the basis of the optically detected identification code (303);
establishing (105) a second communication connection between the vehicle locking assembly (200) and an identification server (305);
reading out (107) an electronic identification from the identification document (301) by the identification server (305) via the first communication connection and the second communication connection; and
unlocking (109) the vehicle locking assembly (200) upon matching between the readout electronic identification and a prestored electronic identification.

2. Method (100) according to claim 1, wherein the vehicle locking assembly (200) is not unlocked in case of lack of matching between the readout electronic identification and the prestored electronic identification.

3. Method (100) according to any one of the preceding claims, wherein for optically detecting (101) the optically detectable identification code (303), an optical image of the optically detectable code (303) is recorded by means of an imaging camera (203).

4. Method (100) according to any one of the preceding claims, wherein detecting (101) the optically detectable identification code (303) comprises extracting the identification code (303) from an optical image of the identification document (301).

5. Method (100) according to any one of the preceding claims, wherein establishing (103) the first communication connection between the electronically readable identification document (301) and the vehicle locking assembly (200) is performed by means of a password-authenticated connection establishment protocol.

6. Method (100) according to claim 5, wherein the password-authenticated connection establishment protocol is a password authenticated connection establishment protocol.

7. Method (100) according to any one of the preceding claims, wherein establishing (105) the second communication connection between the vehicle locking assembly (200) and the identification server (305) is performed by means of a transport layer safety protocol.

8. Method (100) according to any one of the preceding claims, wherein the electronically readable identification document (301) comprises an integrated circuit, and wherein reading out (107) the electronic identification from the identification document (301) comprises performing a chip authentication method for authenticating the integrated circuit of the identification document (301).

9. Method (100) according to any one of the preceding claims, wherein the first communication connection to the electronically readable identification document (301) is established via a terminal (201) for a communication with the electronically readable identification document (301), and wherein reading out (107) the electronic identification from the identification document (301) comprises performing a terminal authentication method for authenticating the terminal (201) or the identification server (305).

10. Method (100) according to any one of the preceding claims, wherein unlocking (109) the vehicle locking assembly (200) comprises transmitting an authentication signal to the vehicle locking assembly (200).

11. Method (100) according to any one of the preceding claims, comprising:
transmitting a public cryptographic key to the identification document (301) by the identification server (305);
generating an electronic identification by linking a private cryptographic key of the identification document (301) and the transmitted public cryptographic key by the identification document (301); and
storing the generated electronic identification in order to obtain the prestored electronic identification.

12. Method (100) according to any one of the preceding claims, wherein the electronic identification of the identification document (301) is a restricted identification of the identification document (301).

13. Method (100) according to any one of the preceding claims, wherein the optically detectable identification code (303) of the identification document (301) is a card access number of the identification document (301).

14. Vehicle locking assembly (200), which is unlockable using an electronically readable identification document (301), comprising:
an imaging camera (203) configured to optically detect an optically detectable identification code (303) of the electronically readable identification document (301); and
a terminal (201) with a first communication interface configured to read out an electronic identification from the electronically readable identification document (301) based on the optically detected identification code (303); and
a second communication interface (205) configured to transmit the readout electronic identification to an identification server (305) via a communication connection and to receive an authentication signal for unlocking (109) the vehicle locking assembly (200).

15. Computer program comprising a program code for performing the method (100) according to any one of claims 1 to 13 when the program code is executed on a computer.

## Revendications

1. Procédé (100) pour déverrouiller une installation de verrouillage de véhicule (200) d'un véhicule grâce à l'utilisation d'un document d'identification à lecture électronique (301), dans lequel le document d'identification à lecture électronique (301) présente un code d'identification optiquement détectable (303), comportant les étapes suivantes:
détecter optiquement (101) le code d'identification optiquement détectable (303) du document d'identification à lecture électronique (301);
établir (103) une première connexion de communication entre le document d'identification à lecture électronique (301) et l'installation de verrouillage de véhicule (200) sur la base du code d'identification optiquement détectable (303);
établir (105) une deuxième connexion de communication entre l'installation de verrouillage de véhicule (200) et un server d'identification (305);
lire (107) une identification électronique du document d'identification (301) par le server d'identification (305) par l'intermédiaire de la première connexion de communication et de la deuxième connexion de communication; et
déverrouiller (109) l'installation de verrouillage de véhicule (200) en cas de concordance entre l'identification électronique lue et une identification électronique préenregistrée.

2. Procédé (100) selon la revendication 1, dans lequel l'installation de verrouillage de véhicule (200) n'est pas déverrouillée dans le cas où il n'y a pas de concordance entre l'identification électronique lue et l'identification électronique préenregistrée.

3. Procédé (100) selon l'une quelconque des revendications précédentes, dans lequel une image optique du code d'identification optiquement détectable (303) est reçue par une caméra d'imagerie afin de détecter (101) optiquement le code d'identification optiquement détectable (303).

4. Procédé (100) selon l'une quelconque des revendications précédentes, dans lequel l'étape de détecter (101) le code d'identification optiquement détectable (303) comporte une extraction du code d'identification (303) d'une image optique du document d'identification (301).

5. Procédé (100) selon l'une quelconque des revendications précédentes, dans lequel l'étape d'établir (103) la première connexion de communication entre le document d'identification à lecture électronique (301) et l'installation de verrouillage de véhicule (200) est réalisée au moyen d'un protocole d'établissement de connexion authentifiable par un mot de passe.

6. Procédé (100) selon la revendication 5, dans lequel le protocole d'établissement de connexion authentifiable par un mot de passe est un protocole Password Authenticated Connection Establishment.

7. Procédé (100) selon l'une quelconque des revendications précédentes, dans lequel l'étape d'établir (105) la deuxième connexion de communication entre l'installation de verrouillage de véhicule (200) et le server d'identification (305) est réalisée par un protocole de sécurité de couche de transport.

8. Procédé (100) selon l'une quelconque des revendications précédentes, dans lequel le document d'identification à lecture électronique (301) comporte un circuit intégré, et dans lequel l'étape de lire (107) l'identification électronique du document d'identification (301) comporte la réalisation d'un procédé d'authentification de chip pour l'authentification du circuit intégré du document d'identification (301).

9. Procédé (100) selon l'une quelconque des revendications précédentes, dans lequel la première connexion de communication au document d'identification à lecture électronique (301) est établie par l'intermédiaire d'un terminal (201) pour une communication avec le document d'identification à lecture électronique (301), et dans lequel l'étape de lire (107) l'identification électronique du document d'identification (301) comporte la réalisation d'un procédé d'authentification de terminal pour authentifier le terminal (201) ou le server d'identification (305).

10. Procédé (100) selon l'une quelconque des revendications précédentes, dans lequel l'étape de déverrouiller (109) l'installation de verrouillage de véhicule (200) comporte le fait d'envoyer un signal d'authentification à l'installation de verrouillage de véhicule (200).

11. Procédé (100) selon l'une quelconque des revendications précédentes, comportant les étapes suivantes:
transmettre une clé cryptographique publique au document d'identification (301) par l'intermédiaire du server d'identification (305);
générer une identification électronique au moyen d'une combinaison entre une clé cryptographique privée du document d'identification (301) et la clé cryptographique publique transmise par le document d'identification (301); et
mémoriser l'identification électronique générée afin d'obtenir l'identification électronique préenregistrée.

12. Procédé (100) selon l'une quelconque des revendications précédentes, dans lequel l'identification électronique du document d'identification (301) est une Restricted Identification du document d'identification (301).

13. Procédé (100) selon l'une quelconque des revendications précédentes, dans lequel le code d'identification optiquement détectable (303) du document d'identification (301) est un Card Access Number du document d'identification (301).

14. Installation de verrouillage de véhicule (200) qui est déverrouillable grâce à l'utilisation d'un document d'identification à lecture électronique (301), comportant:
une caméra d'imagerie (203) qui est réalisée pour détecter optiquement un code d'identification optiquement détectable (303) du document d'identification à lecture électronique (301); et
un terminal (201) comportant une première interface de communication qui est réalisé pour lire une identification électronique du document d'identification à lecture électronique (301) sur la base du code d'identification optiquement détectable (303); et
une deuxième interface de communication (205) qui est réalisée pour envoyer l'identification électronique lue à un server d'identification (305) par l'intermédiaire d'une connexion de communication et pour recevoir un signal d'authentification pour déverrouiller (109) l'installation de verrouillage de véhicule (200).

15. Programme informatique comportant un code de programme pour réaliser le procédé (100) selon l'une quelconque des revendications 1 à 13, quand le code de programme est exécuté sur un ordinateur.
